# EUROPÄISCHE PATENTSCHRIFT

(11) **EP 2 514 575 B1**
(45) Veröffentlichungstag und Bekanntmachung des Hinweises auf die Patenterteilung: **24.08.2016**
(21) Anmeldenummer: 12161407.7
(22) Anmeldetag: 27.03.2012
(51) Int. Cl.: B27M 1/00, B27N 3/28, B29C 47/00, E04F 15/10, E04F 15/02, E04F 13/08, E04F 13/16

(54) **Verfahren zum Herstellen einer Platte**
Method for manufacturing a board
Procédé de fabrication d'une plaque

(30) Priorität: 18.04.2011 DE 102011002124
(43) Veröffentlichungstag der Anmeldung: 24.10.2012
(73) Patentinhaber: Novo-Tech GmbH & Co. KG, 06449 Aschersleben (DE)
(72) Erfinder:
(74) Vertreter: Dantz, Jan Henning

(56) Entgegenhaltungen:
- EP-A1- 1 416 100
- WO-A1-2010/082082
- CA-A1- 2 402 087
- DE-A1- 3 825 340
- DE-A1-102007 046 426
- DE-B3-102006 045 226
- US-A- 2 829 686
- US-A- 3 756 295
- US-A1- 2006 076 083
- US-A1- 2009 277 537

## Beschreibung

Die vorliegende Erfindung betrifft ein Verfahren zum Herstellen einer Platte, insbesondere als Wand- und Bodenbelag, bei dem eine Platte aus einer Mischung aus Naturfasern und einem Polymerwerkstoff extrudiert wird und dann mindestens eine Oberfläche der Platte gehobelt wird, gemäß dem Oberbegiff des Anspruchs 1.

Die DE 10 2006 045 226 offenbart ein Verfahren zum Herstellen von Dielen bei dem zunächst ein lignozellulosehaltiges Fasermaterial und ein Kunststoffmaterial miteinander gemischt und zu Formkörpern extrudiert werden. Die extrudierten Formkörper werden anschließend spanend bearbeitet, um mindestens eine Profilierung herzustellen. Diese Oberflächenbearbeitung bei Dielen aus dem extrudierten Formkörper hat sich an sich bewährt, allerdings wird durch das gleichmäßige Hobeln der Oberfläche eine regelmäßige Oberflächenstruktur eingebracht, die bei natürlichen Werkstoffen nicht vorkommt. Die Produkte werden daher optisch und haptisch noch als Extrusionsprodukt wahrgenommen.

In der EP 1 416 100 wird ein extrudiertes Plattenelement offenbart, das in einem mittleren Bereich mehrere hohle Innenkammern aufweist und an gegenüberliegenden Längskanten als Vollprofil ausgebildet ist. An den Längskanten kann das Vollprofil spanend bearbeitet werden, um eine gewünschte Kontur herzustellen, beispielsweise eine Nut-Feder-Verbindung.

Die DE 38 25 340 offenbart eine Vorrichtung zum Einfräsen von Oberflächenstrukturen in Holzbretter, die zwei hintereinander angeordneten Fräsköpfe aufweist. Um auf dem Holzbrett reproduzierbare Muster herzustellen, wird dieses kontinuierlich entlang einer Auflageplatte bewegt und die unterhalb der Auflageplatte angeordneten Fräsköpfe können an der Unterseite des Holzbrettes entsprechende Profilierungen einbringen.

Es ist daher Aufgabe der vorliegenden Erfindung ein Verfahren zum Herstellen einer Platte zu schaffen, die mindestens an einer Oberfläche eine optische und haptische Natürlichkeit der extrudierten Platte bereitstellt.

Diese Aufgabe wird mit einem Verfahren mit dem Merkmal des Anspruches 1 gelöst.

Bei dem erfindungsgemäßen Verfahren wird zunächst eine Platte aus einer Mischung aus Naturfasern und einem Polymerwerkstoff extrudiert und dann mindestens eine Oberfläche der Platte gehobelt. Dabei sind mehrere Hobel in Förderrichtung hintereinander angeordnet und beim Hobeln wird mindestens ein Hobel quer zur Förderrichtung bewegt. Dadurch wird eine unregelmäßige Oberflächenstruktur an dieser Oberfläche hergestellt, die einen deutlich natürlicheren optischen und haptischen Eindruck erweckt.

Gemäß der Erfindung wird mindestens ein Hobel quer zur Förderrichtung unregelmäßig bewegt, um eine noch unregelmäßigere profilierte Oberflächenstruktur an der Oberfläche herzustellen. Durch die Bewegung des Hobels quer zur Förderrichtung werden an der Oberfläche Rillen, Rippen und andere Geometrien hergestellt, die optisch nicht mehr gleichförmig aussehen. Die Rillen und Rippen sind in unterschiedlicher Breite ausgeführt und weisen zudem auch eine unterschiedliche Tiefe bzw. Höhe auf.

Gemäß einer weiteren Ausgestaltung der Erfindung ist der mindestens eine Hobel so gesteuert, dass mehrere hintereinander hergestellte Platten eine unterschiedliche Oberflächenstruktur besitzen. Es ist sogar möglich, dass hundert hintereinander hergestellte Platten eine unterschiedliche Oberflächenstruktur durch das unregelmäßige Hobeln erhalten, sodass ein mit den Platten verlegter Boden eine besonders ansprechende Gestalt besitzt, sodass der Betrachter das Produkt kaum noch von einem eingefärbten Naturprodukt unterscheiden kann.

Vorzugsweise bearbeitet der Hobel die Oberfläche der Platte mit einer Hobeltiefe von weniger als 2 mm, insbesondere 1 mm bis 1, 5 mm, sodass durch die spanende Bearbeitung des Hobels nur wenig Abfall anfällt. Es hat sich herausgestellt, dass schon geringe Oberflächenprofilierungen ausreichen, um eine optisch und haptisch ansprechende Oberfläche zu erhalten, sodass die geringen Hobeltiefen eine besonders effiziente Herstellung ermöglichen. Zudem können die Spanabfälle dem Extrusionsverfahren wieder zugemischt werden.

Eine Steuerung ist vorgesehen, mittels der mindestens ein Hobel senkrecht zur Förderrichtung oszillierend bewegbar ist, wobei die Steuerung den Hobel unregelmäßig oszillierend zur Herstellung einer unregelmäßigen Oberflächenstruktur antreibt. Dabei ist der mindestens eine Hobel zur Herstellung von Rillen ausgebildet, wobei die Rillen teilweise winklig zur Förderrichtung verlaufen. Dabei wird die Oberfläche der Platte vollflächig durch Hobeln bearbeitet, sodass keine optischen Unterschiede durch nicht gehobelte Bereiche auftreten.

Die Erfindung wird nachfolgend anhand eines Ausführungsbeispieles näher erläutert:
Bei einer erfindungsgemäßen Anlage wird zunächst eine Mischung aus Naturfasern, insbesondere Holzfasern, Holzspäne, Stroh, Heu, Reis, Hanf, Sisal oder andere Naturfasern mit einem Polymerwerkstoff, insbesondere Polypropylen oder Polyethylen gemischt. Diese Mischung wird anschließend erhitzt und zu einer Platte extrudiert, beispielsweise mit Hohlkammern mit einer glatten oder profilierten Oberfläche, wie dies in der DE 10 2006 045 226 beschrieben ist.

Nach Abkühlung der Platte wird die Oberfläche der Platte durch mehrere Hobel bearbeitet, die in Förderrichtung hintereinander angeordnet sind. Dabei ist mindestens ein Hobel senkrecht zur Förderrichtung oszillierend bewegbar, sodass durch den Hobel eine unregelmäßige Oberflächenstruktur herstellbar ist. Der Hobel kann dabei aus mehreren drehbaren Scheiben gebildet sein, die an der Oberfläche Rippen und Rillen herstellen, die sich durch die Bewegung quer zur Förderrichtung zumindest teilweise schräg zur Förderrichtung erstrecken. Durch geeignete Steuerung der verschiedenen Hobel kann dadurch ein besonders unregelmäßiges Oberflächenprofil erhalten werden, das eine optische und haptische Natürlichkeit aufweist. Die Hobeltiefe ist vorzugsweise besonders gering, insbesondere kleiner 2 mm, sodass nur wenige Spanabfälle anfallen.

Die so hergestellte Platte kann dabei einen Faseranteil zwischen 60 % bis 80 % aufweisen, sodass eine besonders umweltfreundliche Herstellung möglich ist. Die Platten können dabei über den Polymerwerkstoff in natürlichen Farben, wie in unterschiedlichen Brauntönen eingefärbt sein. Vorzugsweise ist die Platte einfarbig und die Unregelmäßigkeit der Oberfläche wird ausschließlich durch das Hobeln der Oberfläche bereitgestellt.

Die Oberfläche der Platte wird vollflächig durch Hobeln bearbeitet. Denn bei der Extrusion kann es zu leicht glänzenden Oberflächen kommen, die durch das Hobeln beseitigt werden, dann würden nicht bearbeitete Abschnitte der Oberfläche auffallen.

Die Platte kann ferner an mehreren Seiten durch Hobeln bearbeitet werden, damit der optische Effekt weiter verbessert wird. Zudem ist es möglich, in unterschiedlichen Seiten der Platte eine unterschiedliche Profilierung einzuhobeln, damit die Platte bei Bedarf beidseitig verlegt werden kann.

Die Platte wird vorzugsweise als Boden- oder Wandbelag eingesetzt. Es ist auch möglich, entsprechende Platten in anderen Bereichen einzusetzen, beispielsweise als Pfosten oder Pfeiler für Gartenzäune. Auch andere Bauteile können mit den erfindungsgemäßen Platten hergestellt werden.

## Patentansprüche

1. Verfahren zum Herstellen einer Platte, insbesondere als Boden- oder Wandbelag, mit den folgenden Schritten:
- Extrudieren einer Platte aus einer Mischung aus Naturfasern und einem Polymerwerkstoff,
- Hobeln mindestens einer Oberfläche der Platte,
**dadurch gekennzeichnet, dass** mehrere Hobel in Förderrichtung hintereinander angeordnet sind und beim Hobeln mindestens ein Hobel senkrecht zur Förderrichtung bewegt wird, und
mindestens ein Hobel quer zur Förderrichtung unregelmäßig bewegt wird, um eine unregelmäßige profilierte Oberflächenstruktur an der Oberfläche herzustellen,
wobei die Oberfläche vollflächig durch Hobel bearbeitet wird, so dass die durch Extrusion erzeugten leicht glänzenden Oberflächen durch das Hobeln beseitigt werden,
und durch das Bewegen der Hobel quer zur Förderrichtung an der Oberfläche Rillen und Rippen in unterschiedlicher Breite und in unterschiedlicher Tiefe oder Höhe hergestellt werden, und
eine Steuerung vorgesehen ist, mittels der mindestens eine Hobel senkrecht zur Förderrichtung oszillierend bewegt wird, wobei die Steuerung den Hobel unregelmäßig oszillierend zur Herstellung einer unregelmäßigen Oberflächenstruktur antreibt, wobei der mindestens eine Hobel zur Herstellung von Rillen ausgebildet ist und die Rillen teilweise winklig zur Förderrichtung verlaufen.

2. Verfahren nach Anspruch 1, **dadurch gekennzeichnet, dass** mindestens ein Hobel so gesteuert wird, dass mehrere hintereinander hergestellte Platten eine unterschiedliche Oberflächenstruktur besitzen.

3. Verfahren nach Anspruch 1 oder 2, **dadurch gekennzeichnet, dass** die Hobel die Oberfläche der Platte mit einer Hobeltiefe von weniger als 2 mm, insbesondere 1 mm bis 1,5 mm bearbeiten.

## Claims

1. A method for producing a board, especially as a floor or wall covering, comprising the following steps:
- extruding a board made of a mixture of natural fibres and a polymer material,
- planing at least one surface of the board,
**characterized in that** several planes are arranged one after the other in the conveying direction, and at least one plane is moved perpendicularly to the conveying direction during the planing, and
at least one plane is moved irregularly transversely to the conveying direction in order to produce an irregular profiled surface structure on the surface, wherein the surface is processed by the plane over the entire surface so that the slightly shining surfaces produced by the extrusion are eliminated by the planing,
and grooves and ribs in different widths and in different depths or heights are produced by the movement of the plane transversely to the conveying direction on the surface, and
a controller is provided by means of which the at least one plane is moved in an oscillating manner perpendicularly to the conveying direction, wherein the controller drives the plane in an irregularly oscillating manner for producing an irregular surface structure, wherein the at least one plane is formed for producing grooves and the grooves extend partly angularly to the conveying direction.

2. A method according to claim 1, **characterized in that** at least one plane is controlled in such a way that several boards produced successively have a different surface structure.

3. A method according to claim 1 or 2, **characterized in that** the planes process the surface of the board with a planing depth of less than 2 mm, especially 1 mm to 1.5 mm.

## Revendications

1. Procédé pour la fabrication d'une plaque, en particulier servant de revêtement de sol ou mural, comprenant les étapes suivantes :
- extrusion d'une plaque faite d'un mélange de fibres naturelles et d'un matériau polymère,
- rabotage d'au moins une surface de la plaque,
**caractérisé en ce que** plusieurs rabots sont disposés les uns derrière les autres dans le sens de transport et au moins un rabot est déplacé transversalement par rapport à la direction de transport pendant le rabotage, et
au moins un rabot est déplacé transversalement par rapport à la direction de transport de façon irrégulière, afin de produire une structure de surface ayant un profil irrégulier sur la surface, laquelle surface est entièrement travaillée avec des rabots de façon à éliminer les surfaces légèrement brillantes produites par l'extrusion,
et le déplacement des rabots transversalement par rapport à la direction de transport crée sur la surface des rainures et des nervures de largeur, de profondeur et de hauteur différentes, et
il est prévu une commande au moyen de laquelle au moins un rabot est déplacé en oscillant verticalement par rapport à la direction de transport, laquelle commande entraîne le rabot en oscillations irrégulières pour créer une structure de surface irrégulière, l'au moins un rabot étant conçu pour former des rainures et les rainures formant en partie un angle par rapport à la direction de transport.

2. Procédé selon la revendication 1, **caractérisé en ce qu'**au moins un rabot est commandé de telle manière que plusieurs plaques fabriquées les unes à la suite des autres aient une structure de surface différente.

3. Procédé selon la revendication 1 ou 2, **caractérisé en ce que** les rabots travaillent la surface de la plage sur une profondeur de rabotage de moins de 2 mm, en particulier de 1 mm à 1,5 mm.
